# EUROPEAN PATENT APPLICATION

(11) **EP 4 502 861 A1**
(43) Date of publication of application: **05.02.2025**
(21) Application number: 23779463.1
(22) Date of filing: 10.03.2023
(51) Int. Cl.: G06F 40/253, G06Q 10/0635, G06Q 30/06

(54) **INFORMATION PROCESSING DEVICE AND INFORMATION PROCESSING METHOD**

(30) Priority: 31.03.2022 JP 2022059162
(71) Applicant: Legalon Technologies, Inc., Tokyo 150-6219 (JP)
(72) Inventor: KAWATO, Takashi, Tokyo 150-6219 (JP); YOSHINO, Yumika, Tokyo 150-6219 (JP); INUI, Emiko, Tokyo 150-6219 (JP)
(74) Representative: Hoffmann Eitle
(86) International application number: PCT/JP2023/009441
(87) International publication number: WO 2023/189440

(57) **Abstract**

An information processing apparatus comprises one or more processors 41, the one or more processors 41 being configured to perform processing for: evaluating evaluation targets contained in each of a plurality of documents; extracting a group of documents including at least one document, from among the plurality of documents, based on the evaluation; and outputting information related to the extracted group of documents. Such configuration allows for information related to the plurality of documents to be checked easily.

## Description

### Technical Field

One aspect of the present disclosure relates to an information processing apparatus and an information processing method.

### Background Art

An information processing apparatus for addressing problems associated with documents such as contract documents is known.

For example, Patent Document 1 discloses a document creation support apparatus that outputs know-how and an answer example for each point requiring caution in a document. A storage unit of the document creation support apparatus includes: first corresponding information that stores the know-how so as to be associated with a search key for extracting the point requiring caution; and second corresponding information that stores the answer example so as to be associated with a search key for extracting the point requiring caution. A control unit of the document creation support apparatus receives a document, extracts the point requiring caution from the received document by using a predetermined search key from among the search keys, conducts searches in the first and second corresponding information by using the search key used for the extraction, and obtains know-how and an answer example. The control unit outputs the obtained know-how and answer example so as to be associated with the point requiring caution.

### Citation List

### Patent Document

Patent Document 1: JP2010-257413 A

### Summary

### Technical Problem

In the above-mentioned conventional document creation support apparatus, in order to solve a problem present in the document, it is possible to alert a user about such problem. However, in such conventional document creation support apparatus, it may be difficult to visualize information about a plurality of documents managed by the user.

One aspect of the present disclosure has been made in consideration of the above circumstances, and an object thereof is to provide an information processing technique that makes it possible to easily check information related to a plurality of documents.

### Solution to Problem

An information processing apparatus according to an aspect of the present disclosure is an information processing apparatus that includes one or more processors, the one or more processors being configured to perform processing for: evaluating evaluation targets contained in each of a plurality of documents; extracting a group of documents including at least one document, from among the plurality of documents, based on the evaluation; and outputting information related to the extracted group of documents.

### Advantageous Effects of Invention

According to one aspect of the present disclosure, it is possible to easily check information related to a plurality of documents.

### Brief Description of Drawings

Fig. 1 is a diagram showing an example of functional blocks of a document evaluation output apparatus according to an embodiment of the present disclosure.
Fig. 2 is a conceptual diagram showing an example of risk element information according to an embodiment of the present disclosure.
FIG. 3 is a conceptual diagram showing an example of document attribute information according to an embodiment of the present disclosure.
FIG. 4 is a conceptual diagram showing an example of risk level information according to an embodiment of the present disclosure.
FIG. 5 is a conceptual diagram showing an example of action status information according to an embodiment of the present disclosure.
FIG. 6 is a flowchart showing an example of information output processing for outputting information related to a document according to an embodiment of the present disclosure.
FIG. 7 is a diagram showing an output example of an evaluation visualization screen according to an embodiment of the present disclosure.
FIG. 8 is a diagram showing an output example of an evaluation visualization screen according to an embodiment of the present disclosure.
FIG. 9 is a diagram showing an output example of an evaluation visualization screen according to an embodiment of the present disclosure.
FIG. 10 is a diagram showing an output example of an evaluation visualization screen according to an embodiment of the present disclosure.
FIG. 11 is a diagram showing an output example of an evaluation visualization screen according to an embodiment of the present disclosure.
FIG. 12 is a diagram showing an output example of a document display screen according to an embodiment of the present disclosure.
FIG. 13 is a diagram showing an example of a hardware configuration of a computer according to an embodiment of the present disclosure.

### Description of Embodiments

Embodiments of the present disclosure will now be described below with reference to the accompanying drawings. The following embodiments are merely examples for explaining the present disclosure, and they are not intended to limit the present disclosure to such embodiments alone. Furthermore, various modifications may be applied to the present disclosure, without departing from the gist thereof. Furthermore, in each drawing, the same components are denoted by the same reference symbols whenever possible, and duplicated explanations are omitted.

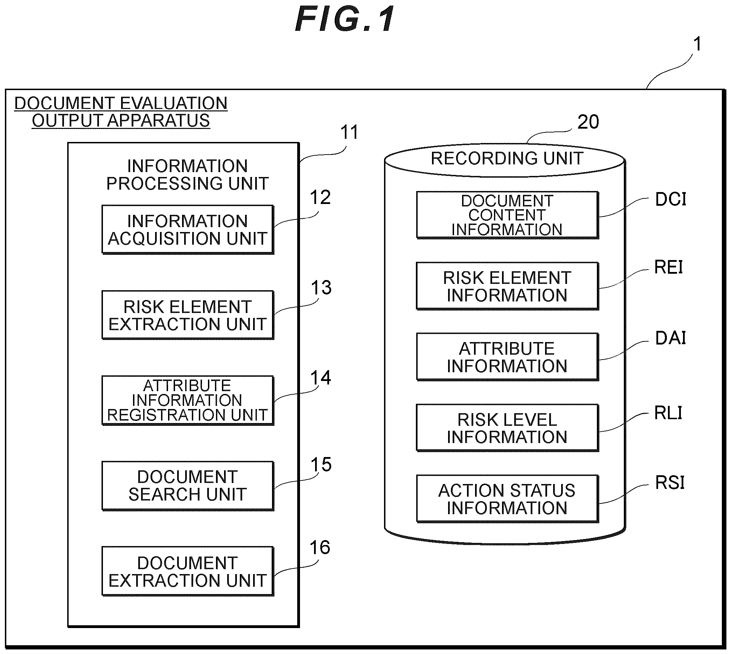

FIG. 1 is a diagram showing an example of functional blocks of a document evaluation output apparatus 1 (information processing apparatus) according to an embodiment of the present disclosure. The document evaluation output apparatus 1 is capable of outputting evaluations regarding, for example, several thousands or several tens of thousands of documents managed by a user. For example, the document evaluation output apparatus 1 may be an information processing apparatus having one or more processors, and the one or more processors may evaluate evaluation targets contained in each of a plurality of documents. Further, the document evaluation output apparatus 1 may be an information processing apparatus configured to perform processing for extracting a group of documents including at least one document from among the plurality of documents based on the degree of evaluated risk and outputting information related to the extracted group of documents.

In this specification, a "document" refers to information that is recorded based on the premise that such document will be referenced. Examples of the document include official documents, contract documents, minutes, rules, notices, provisions, regulations, etc. The "document" may be written in any language, including Japanese, English, Chinese, and others. The term "document content information" refers to information related to the content of the document to be checked. The format of the document content information is not particularly limited, and the document data of the document to be checked may be a data file created using specific word processor software, or the like, or may be text data extracted from such data file. The following description will describe a contract document as an example of the "document."

In this specification, the term "evaluation target" refers to an evaluation target contained in each of a plurality of documents. One or more "evaluation targets" may be contained in a single document. The term "evaluation" refers to an evaluation of a document or an evaluation of an element within a document, and includes, for example, a multilevel evaluation such as good (favorable), normal (neutral), or bad (unfavorable). The "evaluation" is not limited to being three levels, but may be one level, two levels, or four or more levels.

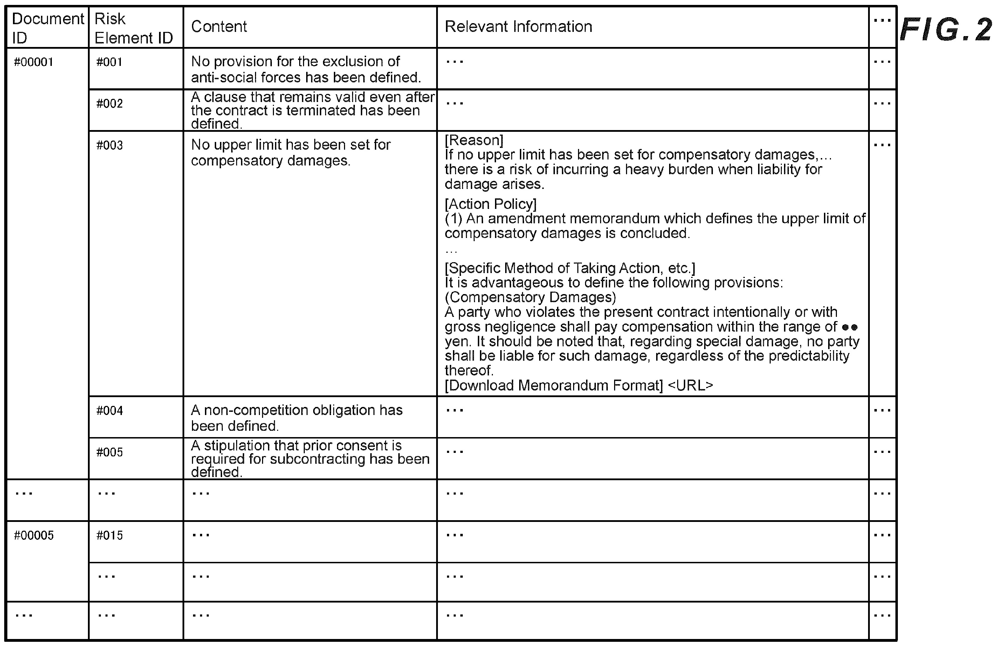

The "evaluation target" may include, for example, a "risk element." In this specification, a "risk element" will be described as an example of the "evaluation target." The "risk element" refers to an element that could be turned to a risk related to a document. The "risk element" may include, for example, at least one of the following: a state in which each of a plurality of documents does not contain an expression that should be contained; and a state in which each of the plurality of documents contains an expression that should be excluded. For example, the "risk element" may include risk element information REI as shown in FIGs. 1 and 2.

FIG. 2 is a conceptual diagram showing an example of risk element information REI according to an embodiment of the present disclosure. As shown in FIG. 2, the state in which "each of a plurality of documents does not contain an expression that should be contained" may include, for example, at least one of the following: in the plurality of documents, the absence of "a stipulation about the exclusion of anti-social forces," the absence of "a stipulation about the upper limit of compensatory damages," and the absence of "a stipulation about the termination date of a contract."

The state in which "each of the plurality of documents contains an expression that should be excluded" may include, for example, at least one of the following: in the plurality of documents, the presence of "a stipulation about a clause that remains valid even after a contract is terminated," the presence of "a stipulation about a non-competition obligation," the presence of "a stipulation that compensatory damages are unlimited," and the presence of "a stipulation that prior consent is required for subcontracting."

In addition, in the risk element information REI, for example, a document ID, a risk element ID, the content of the risk element, and relevant information about the risk element are associated with each other. For example, the "relevant information" may include, without being particularly limited to, at least one of a reason why a risk element could be a risk, an action policy for the risk element, and a specific method of taking an action for the risk element. The risk element information REI may be held, for example, as a database including document IDs and risk element IDs, and a separate database including risk element IDs, the content of the risk elements, and the relevant information of the risk elements.

The "degree of risk" refers to information related to the evaluation of an evaluation target contained in each of the plurality of documents, which refers to the degree of risk evaluated for a risk element. The "degree of risk" corresponds to the ratings such as good (favorable), normal (neutral), and bad (unfavorable), etc., of the aforementioned "evaluation." The "degree of risk" may also include, for example, a "risk level" related to a document, which will be described later. In this specification, the degree of risk will be described as an example of evaluation information.

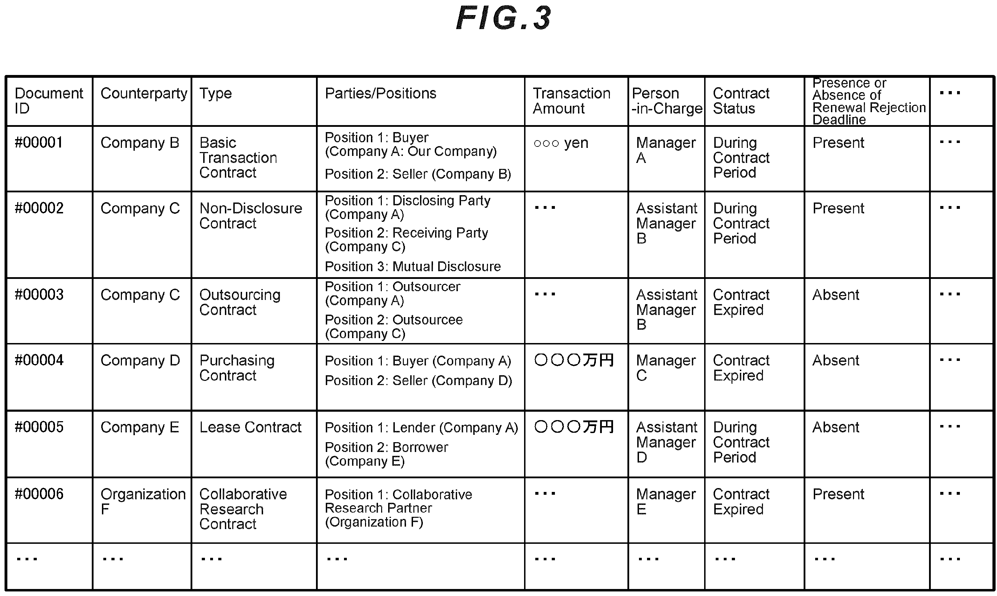

The "attribute information" is information related to the attribute of a document, which may include, for example, attribute information DAI as shown in FIGs. 1 and 3. The "attribute information" will be described later in more detail with reference to FIG. 3.

The term "a group of documents" refers to one or more documents including at least one document extracted from among the plurality of documents based on the evaluation of evaluation items.

The term "a document set" includes a plurality of relevant documents. The "plurality of relevant documents" refers to a plurality of documents having a certain relevance, which may include, for example, a master contract document and an individual contract document. The "master contract document" is a contract document that stipulates basic matters common to all transactions when transactions are continuously conducted with a specific business partner. On the other hand, an "individual contract document" refers to a contract document executed for an individual transaction. In addition, the "document set" also includes a basic transaction contract document that does not contain any description regarding the handling of intellectual property, and a joint application contract document that stipulates the handling of intellectual property arising from transactions related to the basic transaction contract. The "plurality of relevant documents" may also include an original contract document that has already been executed and a document amendment contract document (including an amendment memorandum, etc.) that describes amendments to the original contract document. The plurality of relevant documents may be recorded by associating the mutual document IDs, etc. with each other. In this specification, the "plurality of relevant documents" refers to multiple documents that are different as documents, which are appropriate to be regarded as a single document in order to evaluate the evaluation target. For example, the plurality of relevant documents may include: a first contract document and a second contract document that makes changes, including addition, overwriting, deletion, etc., for the contract terms stated in the first contract document.

The document evaluation output apparatus 1 may be implemented by, for example, a desktop computer, a laptop computer, a smartphone, etc. The document evaluation output apparatus 1 may alternatively be implemented by, for example, one or more server apparatuses. The document evaluation output apparatus 1 may also include a server apparatus and cause the server apparatus to process documents, transmit the output to a user's computer, and display or store information about the output. Such configuration makes it possible to appropriately perform extraction of risk elements, registration of attribute information, evaluation of risks, etc. The document evaluation output apparatus 1 may have a plurality of information processing apparatuses which operate in cooperation with each other, or the document evaluation output apparatus 1 may alternatively be operated by an arbitrary cloud service.

The document evaluation output apparatus 1 may include, as an example, an information processing unit 11 that executes information processing to output information related to a group of documents, and a recording unit 20 that records information for executing such information processing and information generated as a result of the execution of such information processing.

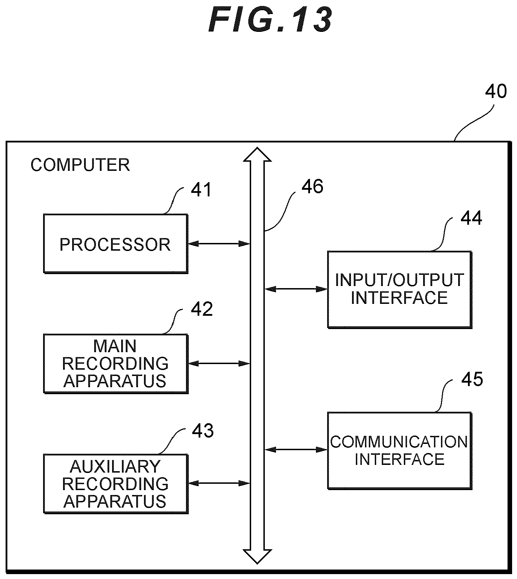

The information processing unit 11 of the present embodiment functionally comprises an information acquisition unit 12, a risk element extraction unit 13, an attribute information registration unit 14, a document search unit 15, and a document extraction unit 16 . Each of the above-mentioned units of the information processing unit 11 can be implemented by, for example, using one or more storage areas such as memories or hard disks, or by having one or more processors (for example, the processor 41 shown in FIG. 13) execute a program stored in the storage areas.

In this specification, the term "unit" does not simply refer to a physical means, but also includes cases where the function of a certain "unit" is implemented by software. In addition, the function of a single "unit" or apparatus may be implemented by two or more physical means or apparatuses, or the functions of two or more "units" or apparatuses may be implemented by a single physical means or apparatus.

The information acquisition unit 12 according to an embodiment of the present disclosure acquires various types of information for executing information processing for outputting evaluations regarding a plurality of documents. The information acquiring unit 12 acquires, for example, document content information DCI indicating the content of a document. The information acquisition unit 12 may acquire the document content information DCI from the recording unit 20 (internal database) in which the information has been recorded in advance, or may acquire the document content information DCI from an external database that is not included in the document evaluation output apparatus 1.

The risk element extraction unit 13 according to an embodiment of the present disclosure extracts one or more risk elements from among a plurality of documents. When extracting one or more risk elements from among a plurality of documents, for example, the risk element extraction unit 13 may read character information in each document, perform morphological analysis, and extract the information into words.

"Morphological analysis" is one type of natural language processing performed by computers, and refers to an analytical process in which natural language text data without annotations about grammatical information is divided into morpheme units based on information such as the grammar, parts of speech of words, etc. of the target language, and the part of speech, etc., of each morpheme is determined.

The risk element extraction unit 13 according to an embodiment of the present disclosure may perform dependency analysis (syntactic analysis), i.e., investigating the modification relationship of a sentence from part-of-speech information. When performing morphological analysis, the risk element extraction unit 13 can refer to a dictionary database including a corpus dictionary or the like. The dictionary database may be held by, for example, the recording unit 20 in the document evaluation output apparatus 1, or may be held by an external server apparatus.

The attribute information registration unit 14 according to an embodiment of the present disclosure registers attribute information DAI related to a plurality of documents. For example, when the document content information DCI is acquired by the information acquisition unit 13, the attribute information registration unit 14 may automatically extract the attribute information DAI from each document corresponding to the document content information DCI. More specifically, the attribute information registration unit 14 reads character information in each document and performs morphological analysis, etc., and then extracts document attribute information DAI from each document. As described above, in one embodiment of the present disclosure, the attribute information registration unit 14 automatically extracts attribute information DAI and registers the extracted attribute information DAI for each of the plurality of documents.

On the other hand, the attribute information registration unit 14 may register attribute information DAI related to a plurality of documents based on input from, for example, a user, a document manager, or an RPA. For example, a user may operate the document evaluation output apparatus 1 (e.g., a mouse in the input/output interface 44 shown in Figure 13) to register the attribute information DAI corresponding to each document in the document evaluation output apparatus 1 (recording unit 20).

It should be noted that the information processing system according to the present embodiment may be related to a document for which all or part of the above-mentioned processing has been performed in advance, as long as it is possible to output an evaluation element to be described later. For example, a document may have undergone extraction of risk elements, including morphological analysis and syntactic analysis, registration of attribute information, etc., before being input or stored in the information processing system.

FIG. 3 is a conceptual diagram showing an example of attribute information DAI according to an embodiment of the present disclosure. As shown in Figure 3, for example, the attribute information DAI may include at least one of the following types of information: a document ID; a business partner, related to the document, of a user (company) who manages the document; the type of the document; at least one of the parties concerned and their position in the document; the transaction amount regarding the document; the person in charge of the document; the contract status of the document; and whether or not there is a renewal rejection deadline for the document. The attribute information DAI may also include a contract start date or a contract end date. In this specification, the attribute information DAI may refer to, for example, information extracted from a document or assigned to a document, which is a potential evaluation target or a potential target of a search that will be described later.

The "type" of a document refers to, for example, the contract type of a contract document, which includes a basic transaction contract, a nondisclosure contract, an outsourcing contract, etc. The "position" in a document refers to, for example, the positions of the parties concerned in a contract document, which includes, in the case of a basic transaction contract, a buyer and a seller. The "transaction amount" related to a document refers to, for example, one or more transaction amounts related to each item specified in a contract document.

The "person in charge" of a document refers to, for example, a person who is involved in the execution of a contract document and is responsible for the contract document, which includes an employee of the user. The "contract status" of a document refers to, for example, the contract status of a contract document, which includes whether the contract is in progress, has expired, has not yet been executed (during preparation of the contract document), etc. The "renewal rejection deadline" of a document refers to, for example, the deadline for rejecting the renewal of a contract. For example, the renewal rejection deadline may be appropriately set within a predetermined period before the expiration of the contract.

Referring again to FIG. 1, the document search unit 15 according to one embodiment of the present disclosure can search for one or more specific documents corresponding to the input attribute information DAI from among the plurality of documents based on the attribute information DAI. For example, the document search unit 15 can use the attribute information DAI input by the user as a search condition to search for one or more specific documents that match the search condition from among a large number of documents managed by the user.

The document extraction unit 16 according to an embodiment of the present disclosure evaluates an evaluation target contained in each of the plurality of documents, as evaluation process (1). For example, the document extraction unit 16 may evaluate the degree of risk. As extraction process (2), the document extraction unit 16 can extract a group of documents which includes at least one document, from among the plurality of documents, based on the evaluated degree risk. The document extraction unit 16 outputs information related to the extracted group of documents as output process (3). Although the document extraction unit 16 executes processes (1) to (3) as described above, it may alternatively execute only part of processes (1) to (3).

Regarding evaluation process (1), the document search unit 15 may search for, for example, specific documents from among the plurality of documents, and the document extraction unit 16 may evaluate the degree of risk of an evaluation target contained in each of the specific documents found in the search. Such configuration makes it possible to evaluate the degree of risk of the evaluation target contained in each of the specific documents which have been searched for from among the plurality of documents based on the attribute information.

Furthermore, with regard to evaluation process (1), the document extraction unit 16 evaluates, for example, the degree of risk of the evaluation target contained in each "document set" that includes a plurality of associated documents. The document extraction unit 16 may evaluate the degree of risk for the entire document set. According to such configuration, it is possible to evaluate the degree of risk for an evaluation target contained in each of the plurality of documents (a document set) having a predetermined relationship. With such configuration, when the document set includes a contract document, it is possible to appropriately evaluate the contract constituted by such document set.

Regarding extraction process (2), the document extraction unit 16 may further extract a group of documents from among the plurality of documents based on a user input concerning risk elements (evaluation targets) related to the plurality of documents. For example, a user may arbitrarily set a flag for each of the plurality of documents in advance. For example, the flag may include flags indicating "risk exists" and "no risk." In such case, the document extraction unit 16 extracts one or more documents for which the "risk exists" flag has been set, as a group of documents. According to this configuration, it is possible to appropriately extract a group of documents desired by the user, including documents for which the user has recognized the presence or absence of a risk.

In addition, with regard to extraction process (2), for example, when the number of risk elements (evaluation targets) contained in each of the plurality of documents changes, the document extraction unit 16 extracts a group of documents from among the plurality of documents based on the evaluation targets after such change. For example, when a specific law or regulation related to contract documents is amended (legal amendment), the number of risk elements contained in a plurality of documents may change. In other words, due to the influence of the legal amendment or the like, it is possible that an evaluation target that originally constituted a risk element in the document may no longer be a risk element, or an evaluation target that originally did not constitute a risk element may become a new risk element. Accordingly, even when the number of evaluation targets contained in each of a plurality of documents changes due to legal amendment or the like, the document extraction unit 16 can still appropriately extract a group of documents from among the plurality of documents.

Furthermore, with regard to extraction process (2), for example, when the degree of risk for a risk element (evaluation target) contained in each of the plurality of documents is changed, the document extraction unit 16 may extract a group of documents from among the plurality of documents based on the degree of risk after such change. For example, if a specific law or regulation related to contract documents or company rules is amended, the degree of risk for the evaluation target may also be changed. Therefore, the document extraction unit 16 can appropriately extract a group of documents from among the plurality of documents even when the degree of risk for the risk elements (evaluation targets) contained in each of the plurality of documents changes due to legal amendment, etc.

When risk elements (such as the number or degree of risk elements) change due to legal amendment, etc., it is preferable to appropriately perform risk evaluation both for contracts to which the pre-change risk (e.g., pre-amendment laws and regulations) is applied, and for documents to which post-change risk (e.g., post-amendment laws and regulations) is applied. Therefore, for example, multiple sets of risk elements can be prepared, such that the sets of risk elements to be subjected to evaluation can be varied using the document attribute information such as the contract execution date.

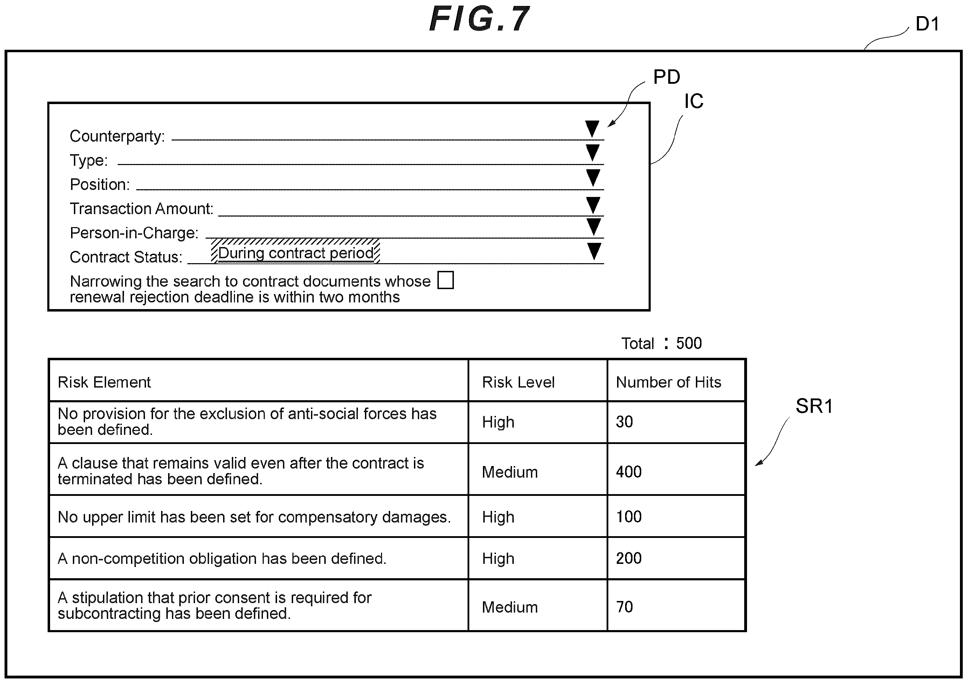

Regarding output process (3), the document extraction unit 16 outputs, as information related to the extracted group of documents, for example, an evaluation visualization screen (for example, FIGs. 7 to 12) that visualizes the evaluations of the documents. The information related to the extracted group of documents may include, for example, at least one of data for displaying the output results on a display or data such as csv that allows for the output results to be checked. The information related to the extracted group of documents may include information for outputting the evaluation of the documents as audio data.

The recording unit 20 records, for example, document content information DCI, risk element information REI, attribute information DAI, risk level information RLI related to the risk level of the risk element, and action status information RSI related to the action status of the risk element. For example, the recording unit 20 may record the document content information DCI, the risk element information REI, the attribute information DAI, the risk level information RLI, and the action status information RSI so as to be associated with each other. The recording unit 20 may also record information related to the document set.

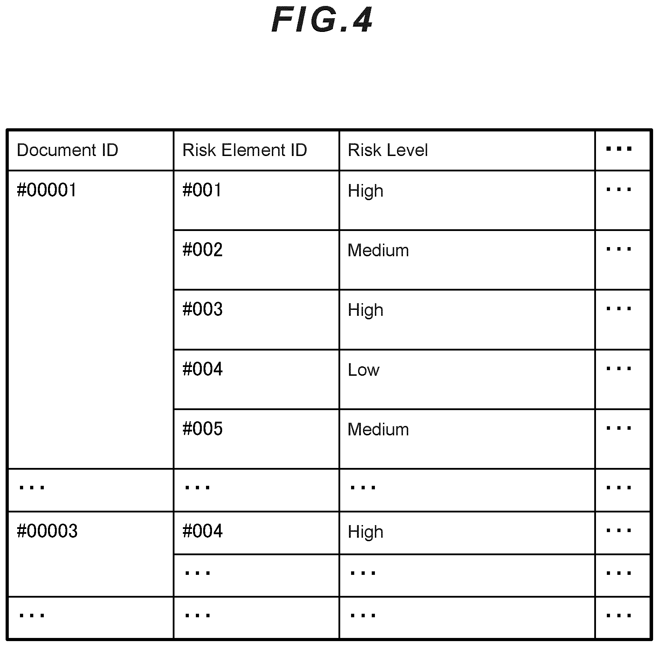

FIG. 4 is a conceptual diagram showing an example of risk level information RLI according to an embodiment of the present disclosure. As shown in FIG. 4, in the risk level information RLI, for example, a document ID, a risk element ID, and a risk level (for example, high, medium, low) may be associated with each other. The risk level may be set, for example, according to the attribute information DAI (for example, the type of the document or the positions of parties concerned in the document), in addition to or in place of the risk element. This is because the risk level of a risk element in a document may vary depending on the "position" of the user, who is a contracting party, in a particular type of contract.

In the embodiment of FIG. 4, the risk level information RLI is recorded so as to be associated with the document ID. Such configuration allows for a document and a risk element contained in such document to be recorded so as to be associated with each other, and allows for the risk element contained in the document and the risk level information to be recorded so as to be associated with each other, which makes it possible to output the document and risk level information so as to be associated with each other. On the other hand, the risk level information RLI may not necessarily be recorded so as to be associated with a specific document. In such case, the risk level information RLI may, for example, be associated with the attribute information or other information of the document.

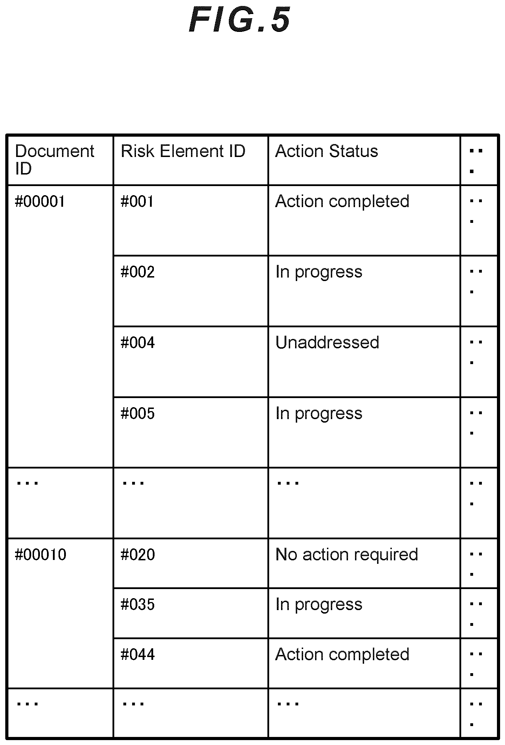

FIG. 5 is a conceptual diagram showing an example of action status information RSI according to an embodiment of the present disclosure. As shown in FIG. 5, in the action status information RSI, for example, a document ID, a risk element ID, and an action status of a user (such as a person in charge at a company) with respect to the risk element may be associated with each other.

The "action status" refers to, for example, the status of an action which is taken in order to solve a risk or a risk element in a specific document. For example, in the situation where a specific document is found "not to contain an expression that should be contained in each of a plurality of documents," the "action status" will be "action completed" when a certain action is taken, such as modifying the specific document so as to contain the relevant expression. Even if it is not possible to modify the specific document so as to contain the relevant expression, when the risk or risk element is solved by taking other measures, the "action status" is turned into "action completed." If the risk or risk element is not solved, the "action status" is "unaddressed." If the risk level is low and no particular action is required, the "action status" will be "no action required."

### <Information Output Processing>

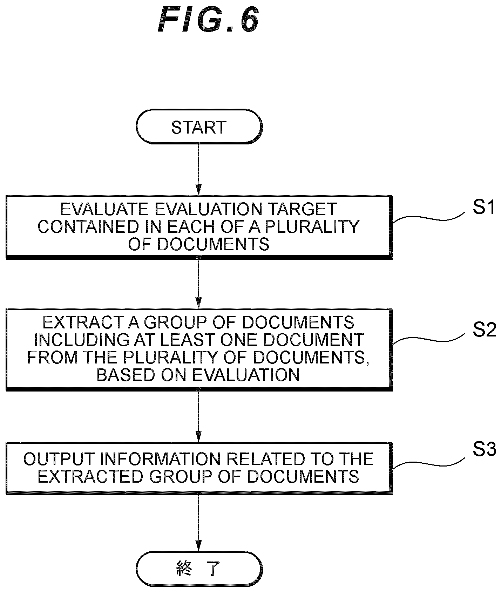

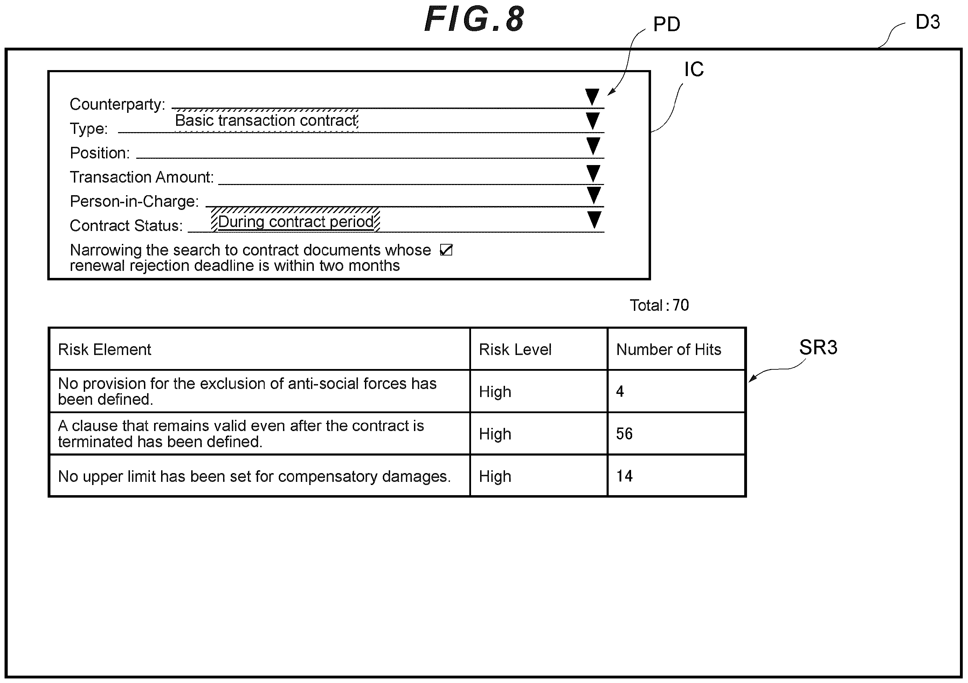

With reference to FIGs 6 to 12, the following description will describe an example of information output processing for outputting information related to a document according to one embodiment of the present disclosure. First, a first example of the information output processing will be described with reference to FIGs. 6 and 8. The following description assumes that the document evaluation output apparatus 1 shown in FIG. 1 has acquired document content information DCI indicating the content of a plurality of documents.

### (First Example)

FIG. 6 is a flowchart showing an example of information output processing for outputting information related to a document according to an embodiment of the present disclosure. As shown in FIG. 6, the document evaluation output apparatus 1 shown in FIG. 1 evaluates the degree of risk for an evaluation target contained in each of a plurality of documents (step S1). The document evaluation output apparatus 1 extracts a group of documents including at least one document, from among the plurality of documents, based on the evaluated degree of risk (step S2).

The document evaluation output apparatus 1 outputs information related to the extracted group of documents (step S3). For example, the document evaluation output apparatus 1 may output, as information related to the extracted group of documents, an evaluation visualization screen such as those shown in FIGs. 7 to 12 in an output unit (such as the input/output interface 44 shown in FIG. 13).

FIG. 7 is a diagram showing an output example of an evaluation visualization screen according to an embodiment of the present disclosure. The user inputs "during contract period" as the attribute information DAI for the item "contract status" in an input field IC of the evaluation visualization screen D1. In such case, the document risk output apparatus 1 searches for one or more (e.g., 500) specific contract documents that are listed as "during contract period" from among a large number of contract documents managed by the user.

The attribute information DAI may be input in any format. The attribute information DAI may be input by selecting from among the options prepared in advance in the input field IC in a pull-down PD format, or in a radio (option) button format, etc., or may be input freely. When input is made by selection from among the options prepared in advance, it is less susceptible to variations in writing than the case in which input is made freely, and a document set may be extracted more appropriately. For example, such way of input is effective when extraction is performed based on the types of documents which may have different document names even if they are of the same type. The attribute information DAI may be input by text or voice.

It should be noted that all documents may be output so as to be associated with risk elements, without conducting search or extraction of documents. In addition, the risk elements may be used as a search condition, such as extracting a document that has a high risk element or a document that contains a risk element.

The document evaluation output apparatus 1 according to one embodiment of the present disclosure generates output information for outputting the number of specific documents having one or more risk elements (e.g., number of hits: 30, 400, 100, etc.) from among the 500 specific documents found in the search, as search result SR1, so as to be associated with each risk element.

The "information related to the specific documents found in the search" may be, for example, information that allows the user to check the evaluation of the plurality of documents, which may optionally include, for example, the number of specific documents that have a risk element. The "information related to the specific documents found in the search" may alternatively be information that qualitatively represents the number of specific documents having a risk element. For example, as the "information related to the specific documents found in the search," the number of hits "400" may be expressed as "large," the number of hits of "200," "100," and "70" may be expressed as "medium," and the number of hits of "30" may be expressed as "small," in the evaluation visualization screen D1.

The document evaluation output apparatus 1 according to an embodiment of the present disclosure may acquire risk level information related to the risk level of one or more risk elements, which are associated with such risk elements. Furthermore, when outputting the information related to the specific documents found in the search, the document evaluation output apparatus 1 may generate output information for outputting one or more risk elements and a risk level (e.g., high, medium) so as to be associated with each other. According to this configuration, the user can easily understand documents with a high risk level or a low risk level from among the documents, as well as the number of documents.

As described above, the document evaluation output apparatus 1 in this embodiment evaluates the degree of risk for the evaluation target contained in each of the plurality of documents, extracts a group of documents including at least one document from among the plurality of documents based on the evaluated degree of risk, and outputs information related to the extracted group of documents. For example, the information related to the extracted group of documents may be visualized. Therefore, the user can easily check information related to the plurality of documents.

### (Second Example)

A second example of output information generation processing will be described below with reference to FIG. 8. In the second example, the document evaluation output apparatus 1 performs search processing using search conditions different from those in the first example.

FIG. 8 is a diagram showing an output example of the evaluation visualization screen in a case where attribute information is further added as a search condition, in comparison with the example shown in FIG 7. In FIG. 8, in an input field IC of an evaluation visualization screen D3, the user inputs, as the attribute information DAI, "during contract period" for the item "contract status," "basic transaction contract" for the item "type," and "checked" for the item "narrowing the search to contract documents whose renewal rejection deadline is within two months."

In this case, the document evaluation output apparatus 1 searches for one or more (70) specific contract documents that are contract documents related to the "basic transaction contract" and that are "contract documents whose renewal rejection deadline is within two months" "during the contract period," from among a large number of contract documents managed by the user. The search conditions related to values such as dates and transaction amounts may each have a certain range with the defined upper and/or lower limits thereof, or may each be a specific value.

Furthermore, the search condition related to dates may be, for example, one month, three months, six months, etc., or may be the number of days, such as within 30 days, within 60 days, etc. In this way, by configuring the search conditions to include the timing of the renewal of contract documents, the user can make a determination to amend a high-risk contract at the time of the next renewal or a determination to terminate a high-risk contract without renewing it, which makes it possible for the user to easily perform the risk management of contracts.

The document evaluation output apparatus 1 of the present embodiment may output, for example, the number of specific documents (e.g., number of hits: 4, 56, 14...) that have one or more risk elements, from among the 70 specific documents found in the search, as search result SR3, so as to be associated with each of such risk elements.

In the second example of the information output processing, the document evaluation output apparatus 1 can perform search processing using search conditions different from those in the first example. For example, the document evaluation output apparatus 1 can narrow down the search results from 700 (first example) to 70 (second example) by adding (increasing) search conditions as compared to the first example.

### (Third Example)

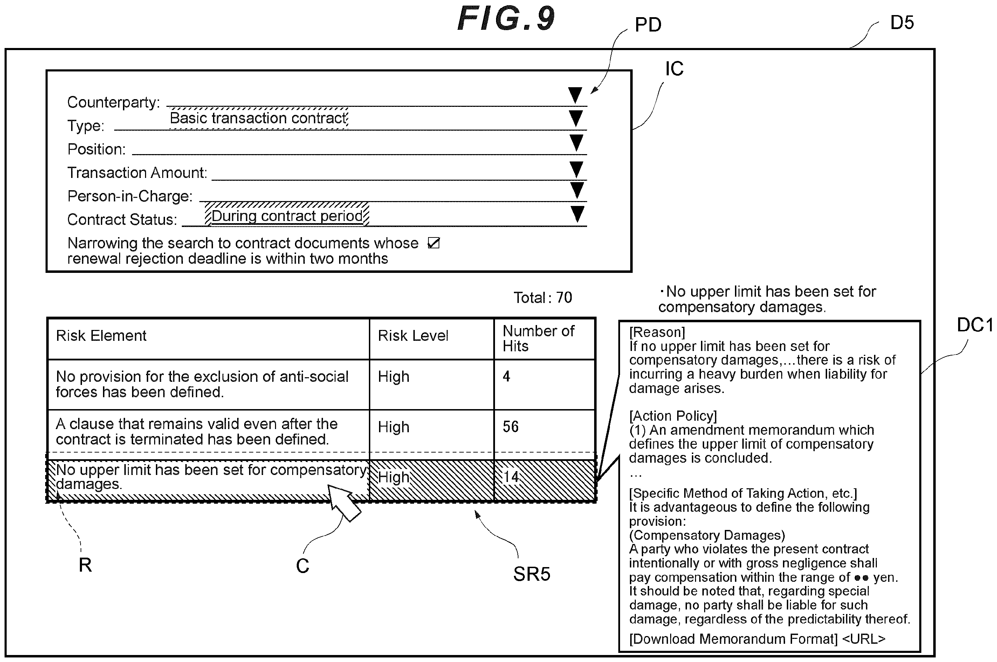

A third example of information output processing will be described below with reference to FIG. 9. In the third example, the document evaluation output apparatus 1 outputs a specific risk element, from among one or more risk elements, and relevant information so as to be associated with each other, based on a user's input.

FIG. 9 is an example of an evaluation visualization screen in which a specific risk element and relevant information related to such risk element are output so as to be associated with each other. In the evaluation visualization screen D5 shown in FIG. 9, the area in which a search result SR5 is displayed is configured so as to be selectable by the user.

On the evaluation visualization screen D5, the user selects, for example, an area R surrounded by the dashed line that corresponds to the risk element that "no upper limit has been set for compensatory damages," in the search result SR5. Although the user may make selection by using any method, a non-limiting example will be described below. For example, when a user stops (hovers) a cursor C corresponding to a mouse operated by the user on the area R (mouse-on state) for a certain period of time (e.g., a few seconds), the area R, i.e., the risk element that "no upper limit has been set for compensatory damages," is selected.

In this case, the document evaluation output apparatus 1 acquires relevant information of one or more risk elements, which are associated with such risk elements. The document evaluation output apparatus 1 outputs an evaluation visualization screen D5 that includes a display field CD1 which displays the relevant information associated with the risk element that "no upper limit has been set for compensatory damages" selected by the user.

In the third example of the information output processing, the document evaluation output apparatus 1 outputs a specific risk element, from among one or more risk elements, and the relevant information so as to be associated with each other, based on the user's input. Therefore, it is possible to easily understand the relevant information corresponding to the specific risk element, e.g., at least one of: the reason why the risk element could be a risk; the action policy for the risk element; the specific method of taking an action with respect to the risk element, etc. Possible actions to be taken in order to solve a risk include, in the case where the document is a contract document, description examples of provisions that are expected to reduce the risk.

The evaluation visualization screen D5 may also be configured so as to allow for a plurality of risk elements to be input. The document evaluation output apparatus 1 may output relevant information corresponding to each of the plurality of risk elements selected by the user so as to be associated with the plurality of risk elements.

### (Fourth Example)

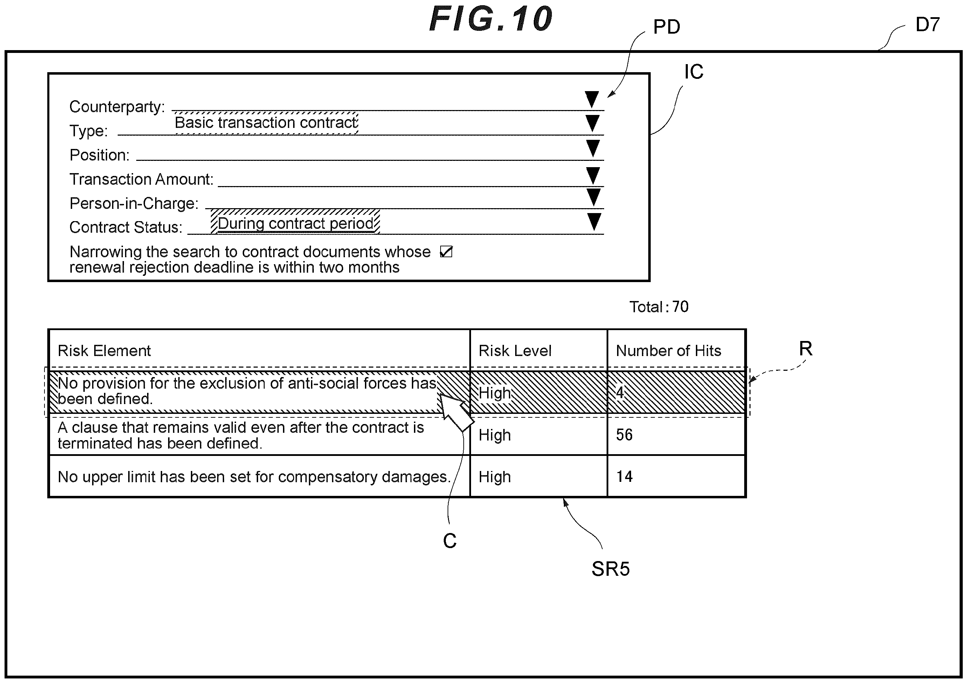

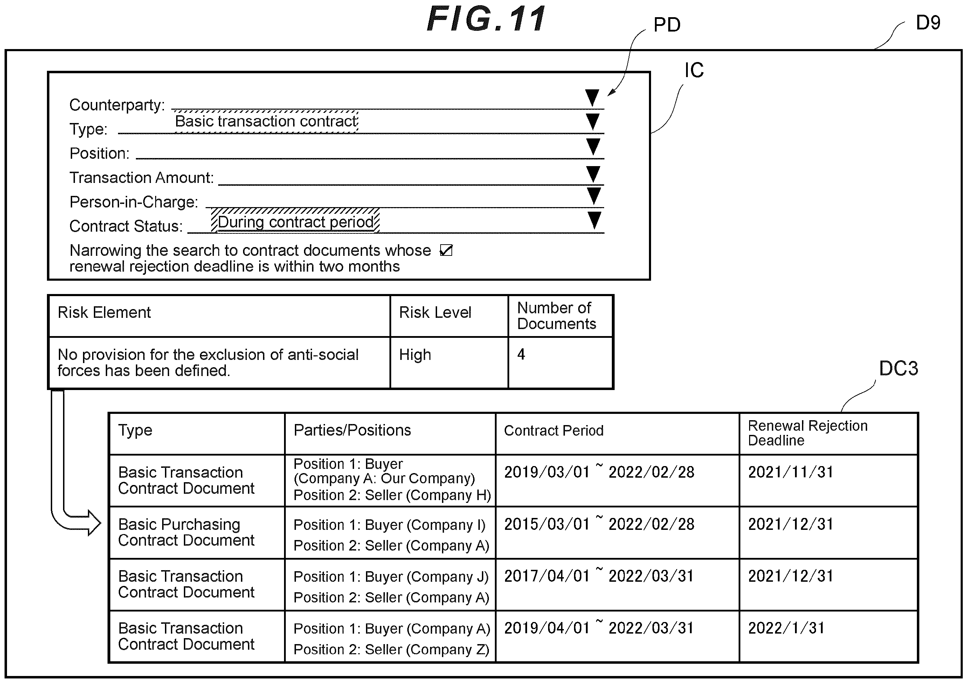

A fourth example of information output processing will be described below with reference to FIGs. 10 and 11. In the fourth example, the document risk output apparatus 1 outputs, for each document, attribute information DAI of a specific document having one or more risk elements selected by a user, from among the specific documents found in the search.

FIG. 10 shows an example of an evaluation visualization screen similar to the evaluation visualization screen D3 shown in FIG 8. The evaluation visualization screen D7 shown in FIG. 10 is configured so that the area which displays the search result SR5 can be selected by the user.

On the evaluation visualization screen D7, the user selects, for example, an area R surrounded by the dashed line corresponding to the risk element that "no provision for the exclusion of anti-social forces has been defined" in the search result SR5. Although the user may make selection by using any method, a non-limiting example will be shown below. For example, when the user operates cursor C corresponding to a mouse, to click or double-click on the area R, such area R, i.e., the single risk element that "no provision for the exclusion of anti-social forces has been defined" is selected.

FIG. 11 is an example of a risk visualization screen that is output when the risk element that "no provision for the exclusion of anti-social forces has been defined" is selected by the user on the evaluation visualization screen D7 in FIG 10. When a single risk element that "no provision for the exclusion of anti-social forces has been defined" is selected by the user on the evaluation visualization screen D7 in FIG. 10, the document evaluation output apparatus 1 outputs an evaluation visualization screen D9 including a display field DC3 in which at least a portion of the attribute information (e.g., a type, parties concerned/positions, a contract period) for four specific documents having such risk element is associated with each of the four specific documents.

In the fourth example of information output processing, the document evaluation output apparatus 1 outputs the attribute information of the four specific documents having one or more risk elements selected by the user, from among the 70 specific documents found in the search, for each of the four specific documents. Accordingly, it becomes possible to easily understand the attribute information of specific documents having specific risk elements selected by the user.

The evaluation visualization screen D7 in FIG. 10 may also be configured so as to allow for a plurality of risk elements to be selected. In such case, the document evaluation output apparatus 1 may output the attribute information of specific documents including each of the plurality of risk elements selected by the user, for each of the plurality of risk elements.

### (Fifth Example)

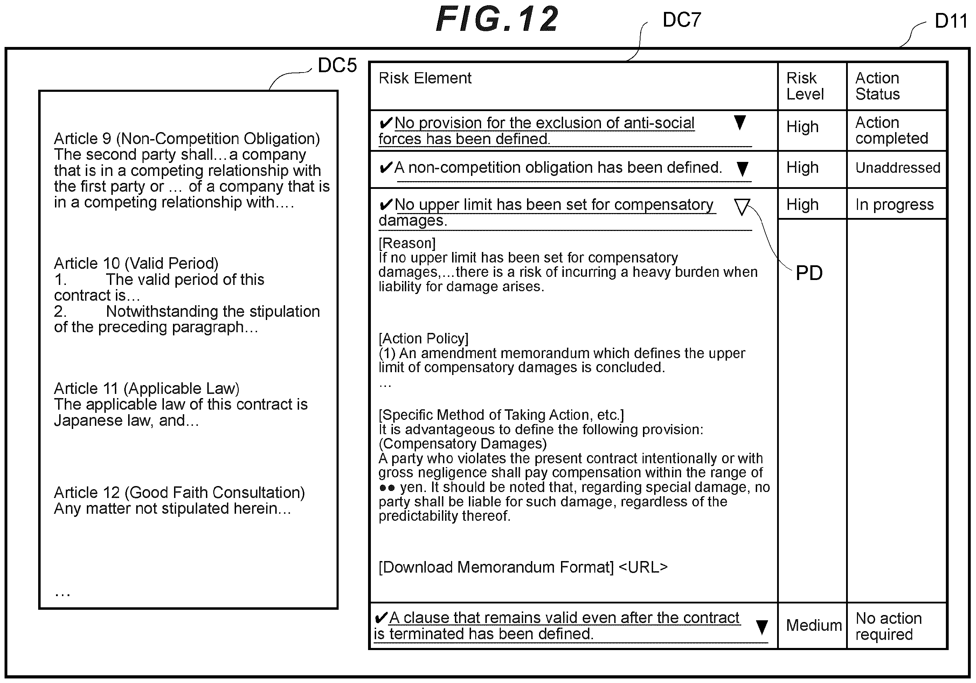

A fifth example of information output processing will be described below with reference to FIG. 12. In the fifth example, when outputting the content of a specific document, the document evaluation output apparatus 1 outputs one or more risk elements of such specific document and an action status so as to be associated with each other.

FIG. 12 is a diagram showing an output example of a document display screen according to an embodiment of the present disclosure. As shown in FIG. 12, the document evaluation output apparatus 1 is capable of outputting a document display screen D11 that includes: a display field DC5 showing one document selected by a user or document content information; and a display field DC7 in which: a plurality of specific risk elements contained in such document; the risk levels of such risk elements; and action statuses with respect to such risk elements, are associated with each other.

The "one document selected by a user" may include, for example, one specific document selected by a user when, on the evaluation visualization screen D9 in FIG. 11, the four specific documents are each selectable and the content of a specific document that has been selected is configured so as to be checkable (for example, when a button or a link is provided for displaying the document content information corresponding to the document).

In such case, the document evaluation output apparatus 1 shown in FIG. 1 acquires action status information RSI associated with one or more risk elements and related to the action status for such risk elements. The document evaluation output apparatus 1 outputs a display field DC5 and a display field DC7 in which one or more risk elements contained in the specific document and the action status are associated with each other. In this case, it is preferable to display the detected risk elements and articles in the document having the risk elements so as to be associated with each other.

The document evaluation output apparatus 1 may output, in the display field DC7, the person (name) in charge who actually deals with each of the plurality of risk elements so as to be associated with each risk element. Moreover, the "action status" in the display field DC7 may be changed as appropriate by the user. Regarding the risk element that "no upper limit has been set for compensatory damages" whose "action status" is "in progress," an action task may automatically be issued, such as by automatically assigning the action to a person in charge. In this case, for example, the person in charge who deals with the risk element that "no upper limit has been set for compensatory damages" is notified of the task for carrying out the action policy, etc. described in the relevant information corresponding to such risk element. It should be noted that, when the "action status" is set to "action completed" or "no action required," no action task will be generated.

In the fifth example of information output processing, when outputting the content of a specific document, the document evaluation output apparatus 1 outputs one or more risk elements contained in such specific document and the action status so as to be associated with each other. Therefore, the user can easily understand, in addition to the content of the specific document that has been selected, the risk elements contained in the specific document and the action statuses associated with such risk elements.

### (Sixth Example)

A sixth example of information output processing will be explained below. In the sixth example, the document evaluation output apparatus 1 outputs, as information related to the extracted group of documents, each of the group of documents and the degree of risk of each of such group of documents so as to be associated with each other. For example, the document evaluation output apparatus 1 outputs, in a list format, each of the group of documents and the degree of risk of each of the group of documents so as to be associated with each other. Such configuration makes it possible for the user to easily understand the degree of risk for each document. The output format of the information related to the group of documents may be selected arbitrarily, without being particularly limited to the list format described above. In addition, it is not necessary to output all of the information related to a group of documents, as long as at least a portion of such information is output.

### (Seventh Example)

A seventh example of information output processing will be described below. In the seventh example, when the document evaluation output apparatus 1 extracts a group of documents based on a user's input that has been set in advance for the documents, it outputs each of the group of documents and information that has been set for the group of documents so as to be associated with each other. For example, a user may arbitrarily set a flag for each of a plurality of documents in advance. The document evaluation output apparatus 1 outputs, in a list format, each of a group of documents and information of the flag set for the group of documents so as to be associated with each other. Such configuration makes it possible for the user to easily understand the content of the flag set for each document (such as "risk exists" or "no risk"). The output format of the information related to the group of documents may be selected arbitrarily, without being particularly limited to the list format described above. Furthermore, it is not necessary to output all of the information related to a group of documents, as long as at least a portion of such information is output.

### (Eighth Example)

An eighth example of information output processing will be described below. In the eighth example, the document evaluation output apparatus 1 outputs a group of documents including, for example, a document set. For example, the extracted document set may be output so as to be associated with the degree of risk as a document set, in the same way as other documents that are not included in such set. In addition, for example, when a displayed document set is selected, a plurality of documents included in the document set are displayed as a list. At this time, it is preferable to display documents that are closely related to the indicated risk elements (for example, documents that contain articles that include the risk elements) so as to be differentiated from the other documents. With such configuration, it is possible to easily identify documents that contain a portion with a high degree of risk from among the documents in the document set.

FIG. 13 is a diagram showing an example of a hardware configuration of a computer according to an embodiment of the present disclosure. An example of a hardware configuration of a computer that can be used to configure the document evaluation output apparatus 1 shown in FIG. 1 will be described below with reference to FIG 13.

As shown in FIG. 13, a computer 40 mainly includes, as hardware resources, a processor 41, a main recording apparatus 42, an auxiliary recording apparatus 43, an input/output interface 44, and a communication interface 45, which are connected to each other via a bus line 46 including an address bus, a data bus, a control bus, etc. It should be noted that, an interface circuit (not shown) may be interposed as appropriate between the bus line 46 and each hardware resource. Regarding each of the hardware resources above, the computer 40 may include one or more of such resources.

The processor 41 controls the entire computer. The processor 41 may correspond to, for example, the information processing unit 11 of the document evaluation output apparatus 1 shown in FIG 1. The main recording apparatus 42 provides a working area for the processor 41 and is a volatile memory such as SRAM (Static Random Access Memory) or DRAM (Dynamic Random Access Memory).

The auxiliary storage apparatus 43 is a non-volatile memory such as HDD, SSD, flash memory, etc. that stores programs being software, data, etc. The programs, data, etc. are loaded from the auxiliary recording apparatus 43 to the main recording apparatus 42 via the bus line 46 at any point in time. The auxiliary recording apparatus 43 may correspond to, for example, the recording unit 20 of the document evaluation output apparatus 1 shown in FIG. 1.

The input/output interface 44 performs one or both of: the output or presentation of information (such as the output of a predetermined screen based on the output information generated by the output information generation unit 16 shown in FIG. 1); and the receipt of information input, and may be a camera, keyboard, mouse, display, touch panel display, microphone, speaker, etc. The communication interface 45 is intended to transmit and receive various types of data to and from an external apparatus or an external database via a predetermined communication network.

The communication interface 45 and the predetermined communication network can be connected in a wired or wireless manner. The communication interface 45 may also acquire information related to the network, such as information related to Wi-Fi access points, information related to the base stations of communication carriers, and the like.

It will be apparent to those skilled in the art that the above-exemplified hardware resources and software can cooperate with each other so as to cause the computer 40 to function as a desired means, perform desired steps, and implement desired functions.

The steps of the present disclosure may be implemented using machine learning techniques. For example, the extraction of risk elements, the evaluation of evaluation targets, etc. may be performed using a trained model. Alternatively, such steps may be rule-based or may be implemented by a combination of trained models and rule-based techniques.

It should be noted that the above-described embodiments are intended to facilitate understanding of the present disclosure, and are not intended to be construed as limiting the present disclosure. The present disclosure may be modified or improved without departing from the gist thereof, and the present disclosure also includes the equivalents thereof. Furthermore, the present disclosure can form various disclosures by appropriately combining multiple components disclosed in each of the above embodiments. For example, some components may be omitted from all the components shown in the embodiment. Furthermore, components in different embodiments may be combined as appropriate.

### Reference Signs List

1... document evaluation output apparatus, 11... information processing unit, 12... information acquisition unit, 13... risk element extraction unit, 14... attribute information registration unit, 15... document search unit, 16... document extraction unit, 20... recording unit, 40... computer, 41... processor, 42... main recording apparatus, 43... auxiliary recording apparatus, 44... input/output interface, 45... communication interface, 46... bus line

## Claims

1. An information processing apparatus comprising one or more processors, the one or more processors being configured to perform processing for:
evaluating evaluation targets contained in each of a plurality of documents;
extracting a group of documents including at least one document, from among the plurality of documents, based on the evaluation; and
outputting information related to the extracted group of documents.

2. The information apparatus according to claim 1, wherein the evaluation is an evaluation of a degree of risk.

3. The information processing apparatus according to claim 1 or 2, wherein the one or more processors are configured to perform processing for searching for specific documents from among the plurality of documents, and evaluating evaluation targets contained in each of the specific documents found in the search.

4. The information processing apparatus according to any one of claims 1 to 3, wherein:
the plurality of documents include a document set that includes a plurality of associated documents; and
the one or more processors are configured to perform processing for evaluating evaluation targets contained in each of documents in the document set.

5. The information processing apparatus according to any one of claims 1 to 4, wherein the one or more processors are configured to perform processing for further extracting the group of documents from the plurality of documents, based on a user input which has been set in advance for the documents.

6. The information processing apparatus according to any one of claims 1 to 5, wherein the one or more processors are configured to perform processing for, when a number of evaluation targets changes, extracting the group of documents from among the plurality of documents based on the evaluation targets after the change.

7. The information processing apparatus according to any one of claims 1 to 6, wherein the one or more processors are configured to perform processing for, when the evaluation for the evaluation targets is changed, extracting the group of documents from among the plurality of documents based on the evaluation after the change.

8. The information processing apparatus according to any one of claims 1 to 7, wherein the one or more processors are configured to perform processing for outputting, as the information related to the extracted group of documents, the evaluation targets and a degree of the evaluation for the evaluation targets, so as to be associated with each other.

9. The information processing apparatus according to any one of claims 1 to 8, wherein the one or more processors are configured to perform processing for outputting, as the information related to the extracted group of documents, the evaluation targets contained in each of the group of documents and an action status for the evaluation targets, so as to be associated with each other.

10. The information processing apparatus according to any one of claims 1 to 9, wherein the one or more processors are configured to perform processing for outputting, as the information related to the extracted group of documents, a specific evaluation target from among the evaluation targets contained in each of the group of documents and relevant information of the specific evaluation target, so as to be associated with each other.

11. The information processing apparatus according to any one of claims 1 to 10, wherein the one or more processors are configured to perform processing for outputting, as the information related to the extracted group of documents, each of the group of documents and information of the evaluation of each of the group of documents, so as to be associated with each other.

12. The information processing apparatus according to any one of claims 1 to 11, wherein the evaluation targets include at least one of: a state in which each of the plurality of documents does not contain an expression that should be contained; and a state in which each of the plurality of documents contains an expression that should be excluded.

13. The information processing apparatus according to any one of claims 1 to 12, wherein, in a case where the documents are contract documents, the attribute information includes at least one of a type of contract, a party concerned of the contract, a position of the party concerned, and a contract status.

14. An information processing method performed by a computer, comprising:
evaluating evaluation targets contained in each of a plurality of documents;
extracting a group of documents including at least one document, from among the plurality of documents, based on the evaluation; and
outputting information related to the extracted group of documents.
